# FASCICULE DE BREVET EUROPEEN

(11) **EP 2 334 603 B1**
(45) Date de publication et mention de la délivrance du brevet: **20.12.2017**
(21) Numéro de dépôt: 09812713.7
(22) Date de dépôt: 11.09.2009
(51) Int. Cl.: C02F 1/28, C02F 1/44, C02F 1/78, B01D 61/16

(54) **PROCEDE DE TRAITEMENT D'EAU INCLUANT UN RECYCLAGE DE CHARBON ACTIF EN POUDRE**
WASSERBEARBEITUNGSVERFAHREN MIT RECYCLING VON AKTIVIERTEM PULVERFÖRMIGEM KOHLENSTOFF
WATER TREATMENT METHOD INCLUDING POWDERED ACTIVATED CARBON RECYCLING

(30) Priorité: 11.09.2008 FR 0856110
(43) Date de publication de la demande: 22.06.2011
(73) Titulaire: Veolia Water Solutions & Technologies Support, 94410 Saint-Maurice (FR)
(72) Inventeur: GAID, Abdelkader, F-75014 Paris (FR)
(74) Mandataire: Vidon Brevets & Stratégie
(86) Numéro de dépôt international: PCT/EP2009/061817
(87) Numéro de publication internationale: WO 2010/029155

(56) Documents cités:
- WO-A-01/39869
- WO-A-2004/083132
- FR-A- 2 696 440
- FR-A- 2 891 540
- US-A- 5 505 841
- HUAU M-C ET AL: "OPTIMISER LE TRAITEMENT DE POTABILISATION PAR L'ASSOCIATION DE CARBOFLUX ET DE MEMBRANES UF : LE CARBO RM" TSM. TECHNIQUES SCIENCES METHODES, GENIE URBAIN GENIE RURAL, PARIS, vol. 97, no. 3, 1 mars 2002 (2002-03-01), pages 54-59, XP008027362 ISSN: 0299-7258
- TOMASZEWSKA M ET AL: "Removal of organic matter from water by PAC/UF system" WATER RESEARCH, ELSEVIER, AMSTERDAM, NL, vol. 36, no. 16, 1 septembre 2002 (2002-09-01), pages 4137-4143, XP004379629 ISSN: 0043-1354

## Description

### 1. Domaine de l'invention

Le domaine de l'invention est celui du traitement de l'eau en vue de son épuration ou de sa potabilisation.

Plus précisément, l'invention concerne un procédé de traitement qui inclut une étape de mise en contact de l'eau à traiter avec un réactif pulvérulent tel que du charbon actif en poudre (CAP).

### 2. Art antérieur

Dans le domaine de l'invention, il est connu pour traiter une eau contenant notamment de la pollution organique, des micro-polluants et des composés présentant un effet perturbateur endocrinien, de combiner la mise en contact de l'eau à traiter avec des réactifs pulvérulents et sa filtration (voir par exemple US 5,505,841). La figure 1 illustre une installation selon l'art antérieur pour la mise en oeuvre d'un tel procédé.

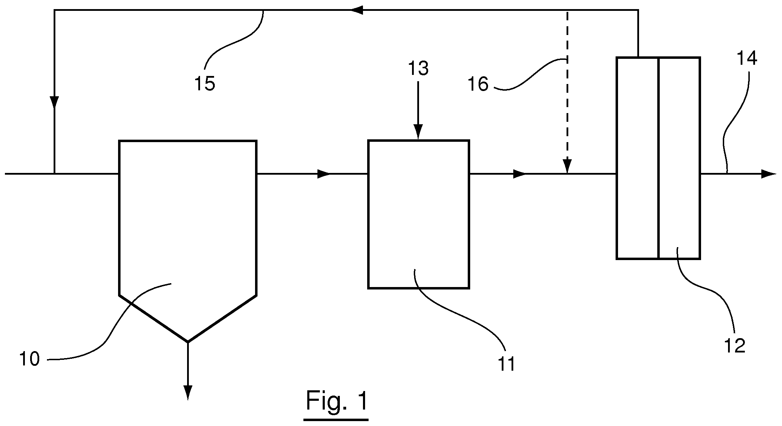

Tel que cela est représenté sur cette figure 1, une installation de ce type comprend un séparateur gravitaire 10, une enceinte de contact 11, et un séparateur membranaire 12 montés en série.

Le traitement d'une eau au moyen d'une telle installation consiste à faire passer l'eau à traiter dans le séparateur gravitaire 10 de manière à séparer une phase liquide d'une phase solide.

La phase liquide provenant du séparateur gravitaire 10 est ensuite acheminée à l'intérieur de l'enceinte de contact 11 à l'intérieur de laquelle est injecté un réactif pulvérulent 13.

Le réactif pulvérulent est ensuite séparé de l'eau au sein du séparateur membranaire 12.

De l'eau traitée est alors extraite 14 de l'installation alors que le réactif pulvérulent est recyclé 15 en amont du séparateur gravitaire 10.

Une variante de cette technique, qui est illustrée en pointillés sur la figure 1, consiste à recycler le réactif pulvérulent 16 en aval de l'enceinte agitée 11.

### 3. Inconvénients de l'art antérieur

Cette technique est efficace en ce qu'elle permet de traiter convenablement de l'eau en vue de son épuration ou de sa potabilisation. Elle présente toutefois quelques inconvénients.

Notamment, cette technique présente l'inconvénient de nécessiter la mise en oeuvre d'un séparateur gravitaire de manière à séparer la phase liquide de la phase solide incluant une partie du réactif pulvérulent recyclé.

La mise en oeuvre d'un tel séparateur gravitaire impose une faible vitesse de traitement de l'eau. Ceci induit des temps de traitement relativement longs.

En outre, la mise en oeuvre d'un tel séparateur gravitaire tend à augmenter de manière non négligeable la taille des installations nécessaires à la mise en oeuvre d'un tel procédé de traitement, lesquelles sont assez peu compactes.

Un autre inconvénient de cette technique de l'art antérieur est lié au fait que le temps de contact de l'eau avec le réactif pulvérulent au sein de l'enceinte 11 est relativement long.

En effet, cette technique permet d'injecter de faibles quantités de réactif pulvérulent dans l'eau. La concentration en réactif pulvérulent de l'eau au sein de l'enceinte 11 est seulement de l'ordre de 10 à 30 mg/l.

Par conséquent, le paramètre Ct, qui traduit le niveau de performance de ce type de procédé, et qui est égal au produit de la concentration en réactif pulvérulent et du temps de contact de l'eau avec le réactif pulvérulent, ne dépasse pas, dans ce type d'installation, 100 à 300 mg/l.mn pour un temps de contact de 10 minutes.

Ainsi, de manière à obtenir un Ct de valeur importante, c'est-à-dire de façon à obtenir un niveau de performance élevé, il est nécessaire de mettre en contact l'eau avec le réactif pulvérulent pendant des périodes relativement longues.

L'association de la mise en oeuvre d'un séparateur gravitaire et d'une mise en contact de l'eau et du réactif pulvérulent pendant de longues périodes conduit donc à :
- augmenter la taille des installations ;
- augmenter les temps de traitement ;
ce qui conduit à :
- une productivité relativement réduite ;
- des coûts d'exploitation relativement importants.

### 4. Objectifs de l'invention

L'invention a notamment pour objectif de pallier ces inconvénients de l'art antérieur.

Plus précisément, un objectif de l'invention est de fournir, dans au moins un mode de réalisation de l'invention, une technique de traitement d'eau associant sa mise en contact avec un réactif pulvérulent et sa filtration, qui présente une valeur de paramètre Ct importante.

Un autre objectif de l'invention est de mettre en oeuvre, dans au moins un mode de réalisation, une telle technique de traitement d'eau qui nécessite des temps de traitement relativement courts, à tout le moins comparativement aux techniques de l'art antérieur.

L'invention vise également à fournir, dans au moins un mode de réalisation de l'invention, une telle technique dont la mise en oeuvre nécessite des installations de taille relativement réduite, à tout le moins comparativement aux techniques de l'art antérieur.

L'invention a encore pour objectif de fournir, dans au moins un mode de réalisation de l'invention, une telle technique qui soit efficace et simple à mettre en oeuvre.

### 5. Exposé de l'invention

Ces objectifs, ainsi que d'autres qui apparaîtront par la suite, sont atteints à l'aide d'un procédé de traitement d'eau en vue de son épuration ou de sa potabilisation, caractérisé en ce qu'il comprend les étapes suivantes :
- une étape d'injection de charbon actif en poudre (CAP) dans ladite eau de façon à obtenir un mélange eau à traiter/CAP ;
- une étape d'acheminement dudit mélange eau à traiter/CAP au sein d'une zone agitée de mise en contact en vue d'obtenir un mélange eau à traiter/CAP agité ;
- une étape de filtration dudit mélange eau à traiter/CAP agité au sein d'une unité de filtration membranaire en vue de produire une eau traitée et un concentrat riche en CAP ;
- une étape de recirculation dudit concentrat riche en CAP en amont et/ou au sein de ladite zone agitée ;
la concentration en CAP dudit mélange étant comprise entre 1 et 10 g/l ;
ledit mélange eau à traiter/CAP étant maintenu dans ladite zone agitée pendant un temps de contact compris entre 2 et 20 minutes ;
ledit procédé comprenant de plus une étape d'ozonation de ladite eau à traiter, incluant l'injection d'ozone dans ladite eau à traiter préalablement à l'injection de CAP de façon à obtenir un mélange eau à traiter/ozone dont la concentration en ozone est comprise entre 0,5 et 3 mg/l.

Ainsi, l'invention repose sur une nouvelle approche du traitement d'une eau par adsorption sur CAP dans une zone agitée de mise en contact puis par filtration.

Une telle approche consiste, après filtration, à recycler le concentrat riche en CAP juste en amont et/ou directement au sein de la zone agitée de mise en contact.

La mise en oeuvre de l'invention permet donc, du fait de ce recyclage, d'augmenter de façon considérable la concentration en CAP dans l'eau contenue dans la zone de mise en contact.

Ainsi, l'invention conduit à obtenir un Ct important tout en limitant le temps de contact du CAP et de l'eau. Par exemple, en considérant un temps de mise en contact de 10 minutes, le Ct d'une installation pour la mise en oeuvre d'un procédé selon l'invention peut atteindre 50 000 mg/l.mn alors qu'il se situe aux alentour de 100 à 300 mg/l.mn pour une installation selon l'art antérieur.

En outre, la technique selon l'invention ne nécessite pas de mettre en oeuvre un séparateur gravitaire. Ceci conduit également à réduire le temps de traitement de l'eau tout en réduisant la taille des installations nécessaires au traitement de l'eau.

Le traitement de l'eau selon la présente technique conduit ainsi à réduire le temps de contact de l'eau avec le CAP et la taille des installations nécessaires à sa mise en oeuvre. La présente technique permet par conséquent de diminuer le coût du traitement de l'eau.

La mise en oeuvre de l'invention permet donc d'obtenir un mélange eau/CAP dans la zone de mise en contact qui présente une concentration en CAP très élevée comparativement aux techniques de l'art antérieur.

En effet, selon ces techniques, la concentration en CAP du mélange d'eau et de CAP varie seulement entre 10 et 30 mg/l. L'invention, qui prévoit que cette concentration peut atteindre 10 g/l, permet de multiplier jusqu'à environ 170 fois la concentration en CAP du mélange eau/CAP.

Le Ct d'une technique selon l'invention peut ainsi atteindre des valeurs très élevées tout en limitant le temps de contact de l'eau et du CAP.

La durée du temps de contact est choisie en fonction de la concentration en polluant à éliminer.

La mise en oeuvre de l'invention permet de traiter l'eau efficacement et dans des temps très courts, à tout le moins comparativement aux techniques de l'art antérieur. Ceci conduit donc à réduire les coûts d'exploitation liés au traitement de l'eau.

Selon l'invention le procédé comprend une étape d'ozonation de ladite eau à traiter comprenant l'injection d'ozone dans ladite eau à traiter préalablement à l'injection de CAP de façon à obtenir un mélange eau à traiter/ozone dont la concentration en ozone est comprise entre 0,5 et 3 mg/l.

La valeur de cette concentration est choisie en fonction de la concentration en polluant à éliminer. Une telle ozonation permet :
- d'oxyder les molécules organiques en molécules de tailles plus petites et plus facilement adsorbables ;
- d'oxyder les molécules non adsorbables, telles que notamment certains pesticides (Glyphosate, AMPA...), ce qui conduit à améliorer l'abattement de la pollution de l'eau ; et
- de détruire les molécules odorantes.

Selon une caractéristique avantageuse, ladite étape de recirculation est précédée d'une étape d'extraction du CAP usagé contenu dans ledit concentrat.

Ceci permet d'évacuer le CAP hors d'usage et de ne recycler que le CAP encore actif, c'est-à-dire dont le pouvoir adsorbant est non nul.

Préférentiellement, ledit CAP présente une granulométrie dont la valeur est comprise entre 5 et 50 µm.

De telles caractéristiques dimensionnelles confèrent au CAP une bonne aptitude à l'adsorption et permettent d'obtenir un traitement efficace de l'eau.

Selon une caractéristique avantageuse, ladite unité de filtration intègre des membranes d'ultrafiltration.

Selon une autre caractéristique avantageuse, ladite unité de filtration intègre des membranes de microfiltration.

La mise en oeuvre de membranes de l'un ou l'autre de ces types permet de séparer efficacement le CAP de l'eau traitée et de retenir efficacement la part non adsorbable et non oxydable du COT (Carbone Organique Total) de l'eau à traiter.

La mise en oeuvre de l'invention conduit donc à augmenter la performance du traitement de l'eau tout en réduisant le temps et l'espace qu'il requiert, et par voie de conséquence les coûts qui y sont associés.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma d'une installation de traitement selon l'art antérieur ;
- la figure 2 illustre un schéma d'une installation selon un mode de réalisation de l'invention.

### 7. Description d'un mode de réalisation de l'invention

### 7.1. Rappel du principe de l'invention

L'invention concerne le traitement d'une eau par mise en contact avec du CAP dans une zone agitée de mise en contact puis filtration dans une unité de filtration membranaire.

Le principe général de cette invention repose sur la mise en oeuvre, après adsorption et filtration, du recyclage du concentrat riche en CAP issu de la filtration juste en amont et/ou directement au sein de la zone de mise en contact agitée.

La mise en oeuvre d'une telle étape de recyclage permet d'augmenter de façon considérable la concentration en CAP dans l'eau contenue dans la zone de mise en contact. On obtient ainsi un Ct dont la valeur est importante tout en limitant le temps de contact du CAP et de l'eau.

Le traitement de l'eau selon la présente technique conduit ainsi à réduire le temps de contact de l'eau avec le CAP et la taille des installations nécessaires à sa mise en oeuvre et par conséquent à diminuer les coûts du traitement de l'eau.

### 7.3. Exemple d'un mode de réalisation

### 7.3.1. Installation

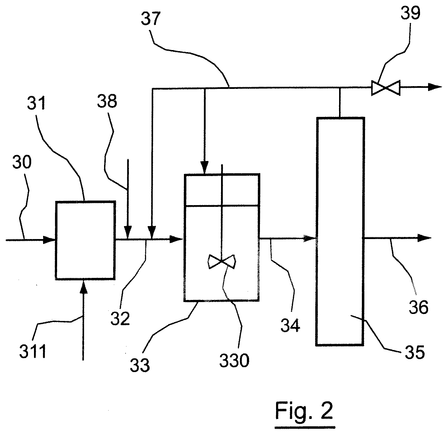

On présente, en relation avec la figure 2, un mode de réalisation d'une installation destinée à la mise en oeuvre d'un procédé selon l'invention.

Tel que cela est représenté sur cette figure 2 une telle installation comprend une canalisation d'arrivée d'eau à traiter 30. Cette canalisation d'arrivée d'eau 30 débouche dans une cuve d'ozonation 31 comprenant des injecteurs d'ozone 311.

La cuve d'ozonation 31 présente une sortie qui est reliée à l'entrée d'une cuve de mise en contact 33 au moyen d'une canalisation 32.

La cuve de contact 33 loge un agitateur 330. La cuve de mise en contact 33 constitue ainsi une cuve agitée. La cuve de contact 33 présente une sortie qui est reliée à une canalisation d'évacuation 34.

La canalisation d'évacuation 34 débouche à l'entrée d'une unité de filtration membranaire 35.

Cette unité de filtration 35 loge une pluralité de membranes d'ultrafiltration ou de type microfiltration. Elle présente une première sortie qui est reliée à une canalisation d'extraction d'eau traitée 36. Elle présente également une deuxième sortie qui est reliée à une canalisation de recirculation 37 d'un concentrat riche en CAP.

La canalisation 37 débouche juste en amont de la cuve de mise en contact 33 et/ou directement au sein de cette cuve 33.

Des moyens d'injection 38 de CAP sont reliés à la canalisation 32. Ces moyens d'injection 38 peuvent par exemple comprendre un ou plusieurs injecteurs.

Selon une variante, des moyens d'extraction 39 de CAP usagé sont reliés à la canalisation de recirculation 37. Ces moyens d'extraction peuvent par exemple comprendre un hydrocyclone ou tout autre type d'équipement qui permet de séparer le CAP usagé du CAP toujours actif.

### 7.3.2. Procédé

Un procédé de traitement d'eau par la mise en oeuvre d'une installation selon ce mode de réalisation va maintenant être décrit.

Un tel procédé de traitement d'eau consiste à acheminer l'eau à traiter dans la cuve d'ozonation 31 via la canalisation d'amenée 30.

Les injecteurs d'ozone 311 sont ensuite mis en oeuvre de façon telle que la concentration en ozone du mélange eau à traiter/ozone contenu dans la cuve d'ozonation 31 soit comprise entre 0,5 et 3 mg/l. Le temps de contact de l'ozone et de l'eau à traiter dans la cuve d'ozonation 31 est compris entre 1 et 30 minutes.

La mise en oeuvre d'une étape d'ozonation de l'eau à traiter présente de nombreux avantages au rang desquels figurent les suivants :
- l'ozone oxyde les molécules organiques en molécules de tailles plus petites et plus facilement adsorbables ;
- l'ozone oxyde des molécules non adsorbables telles que certains pesticides (Glyphosates, AMPA...), ce qui conduit à améliorer l'abattement de la pollution de l'eau ;
- l'ozone conduit à la destruction des molécules odorantes.

L'eau ozonée au sein de la cuve d'ozonation 31 est ensuite acheminée dans la cuve de mise en contact 33 via la canalisation 32. Parallèlement, les moyens d'injection 38 sont mis en oeuvre de façon à injecter du CAP dans l'eau ozonée à traiter circulant dans la canalisation 32.

Le CAP injecté dans l'eau présente avantageusement une granulométrie dont la valeur est comprise entre 5 et 50 µm. Le CAP peut par exemple être d'origine végétale ou minérale.

Le mélange de CAP et d'eau ozonée acheminé dans la cuve de mise en contact 33 y est agité pendant un temps de mise en contact qui peut varier de 2 à 20 minutes. La concentration en CAP de l'eau présente dans la cuve de mise en contact 33 est comprise entre 1 et 10 g/l.

Le mélange agité d'eau ozonée et de CAP contenu dans la cuve de mise en contact 33 est ensuite acheminé vers l'unité de filtration 35 au moyen de la canalisation d'évacuation 34.

Ce mélange est filtré au sein de l'unité de filtration 35 en vue de produire une eau traitée et un concentrat riche en CAP.

L'eau traitée est extraite au moyen de la canalisation d'extraction d'eau traitée 36.

Le concentrat riche en CAP issu de la filtration du mélange d'eau ozonée et de CAP est recyclé via la canalisation 37 juste en amont de la cuve de mise en contact 33 et/ou directement à l'intérieur de celle-ci.

Les moyens d'extraction 39 du CAP usagé peuvent être mise en oeuvre de façon à ce que seul le CAP encore actif puisse être recyclé.

La mise en oeuvre combinée d'une ozonation, d'une adsorption sur CAP avec recyclage du CAP et d'une filtration sur membrane permet :
- de faciliter l'adsorption sur CAP des molécules organiques du fait de la diminution de leur taille par ozonation ;
- de traiter une grande partie des molécules adsorbables du fait du Ct important ;
- de traiter les molécules non adsorbables par ozonation ;
- de retenir sur les membranes la partie non oxydable et non adsorbable du COT qui correspond approximativement à 10% du COT global.

### 7.3.3. Essais

L'efficacité d'un procédé de traitement selon ce deuxième mode de réalisation de l'invention a été évaluée en traitant une eau brute dont le COT (Carbone Organique Total) s'élevait à 5 mg/l.

Après ozonation de l'eau à traiter de telle manière qu'elle présente une concentration en ozone égale à 2 mg/l, la valeur de son COT s'élevait à 4 mg/l.

La seule ozonation permet donc d'atteindre un taux d'abattement du COT d'environ 20%.

Le traitement d'une telle eau ozonée de façon que la concentration en CAP du mélange présent dans la cuve de mise en contact 33 s'élève à 20 mg/l, et pour un temps de contact de 10 minutes, a conduit à la production d'une eau traitée dont le COT était égal à 3,20 mg/l.

Le traitement de l'eau brute par ozonation et adsorption sur CAP sans recyclage du CAP permet ainsi d'atteindre un abattement de 36% de la COT de l'eau brute, et une valeur de Ct de 200 mg/l.mn. L'adsorption permet d'augmenter de 16% l'abattement de la COT de l'eau brute et d'abattre de 20% le COT de l'eau ozonée.

Le traitement de l'eau brute par ozonation et adsorption avec recirculation du CAP de telle manière que la concentration en CAP du mélange présent dans la cuve de mise en contact 33 s'élève à 5 g/l, et pour un temps de contact de 10 minutes, a conduit à la production d'une eau traitée dont la COT était égal à 2,00 mg/l.

Le traitement par ozonation et adsorption du CAP avec recyclage du CAP permet ainsi d'atteindre un abattement de 60% de la COT, et une valeur de Ct de 5 000 mg/L.mn. La mise en oeuvre d'un recyclage du CAP selon l'invention permet donc d'augmenter de 24% l'abattement de la COT de l'eau brute, et d'augmenter de 2400% la valeur du Ct. L'adsorption et le recyclage permettent d'abattre de 50% le COT de l'eau ozonée.

### 7.4. Avantages

La mise en oeuvre d'une technique de traitement d'eau selon l'invention permet notamment :
- de réduire le temps du traitement ;
- de réduire la taille des installations de traitement, et
- par conséquent de limiter le coût du traitement de l'eau.

De plus, l'étape d'ozonation permet d'éliminer des composés qui n'ont ensuite pas à être adsorbé sur le CAP et ainsi de rendre plus disponible ce CAP pour d'autres composés.

## Revendications

1. Procédé de traitement d'eau en vue de son épuration ou de sa potabilisation, **caractérisé en ce qu'**il comprend les étapes suivantes :
- une étape d'injection de charbon actif en poudre (CAP) dans ladite eau de façon à obtenir un mélange eau à traiter/CAP ;
- une étape d'acheminement dudit mélange eau à traiter/CAP au sein d'une zone agitée de mise en contact en vue d'obtenir un mélange eau à traiter/CAP agité ;
- une étape de filtration dudit mélange eau à traiter/CAP agité au sein d'une unité de filtration membranaire en vue de produire une eau traitée et un concentrat riche en CAP ;
- une étape de recirculation dudit concentrat riche en CAP en amont et/ou au sein de ladite zone agitée ;
la concentration en CAP dudit mélange étant comprise entre 1 et 10 g/l ;
ledit mélange eau à traiter/CAP étant maintenu dans ladite zone agitée pendant un temps de contact compris entre 2 et 20 minutes ;
ledit procédé comprenant de plus une étape d'ozonation de ladite eau à traiter, incluant l'injection d'ozone dans ladite eau à traiter préalablement à l'injection de CAP de façon à obtenir un mélange eau à traiter/ozone dont la concentration en ozone est comprise entre 0,5 et 3 mg/l.

2. Procédé de traitement d'eau selon la revendication 1, **caractérisé en ce que** ladite étape de recirculation est précédée d'une étape d'extraction de CAP usagé dudit concentrat.

3. Procédé de traitement d'eau selon l'une quelconque des revendications 1 ou 2, **caractérisé en ce que** ledit CAP présente une granulométrie dont la valeur est comprise entre 5 et 50 µm.

4. Procédé de traitement d'eau selon l'une quelconque des revendications 1 à 3, **caractérisé en ce que** ladite unité de filtration intègre des membranes d'ultrafiltration.

5. Procédé de traitement d'eau selon l'une quelconque des revendications 1 à 4, **caractérisé en ce que** ladite unité de filtration intègre des membranes de microfiltration.

## Patentansprüche

1. Verfahren zur Behandlung von Wasser zwecks seiner Reinigung oder seiner Aufbereitung zu Trinkwasser, **dadurch gekennzeichnet, dass** es die folgenden Schritte umfasst:
- einen Schritt der Injektion von pulverförmiger Aktivkohle (PAK) in das Wasser, um ein Gemisch zu behandelndes Wasser/PAK zu erhalten;
- einen Schritt der Einleitung des Gemisches zu behandelndes Wasser/PAK in einen gerührten Kontaktierungsbereich zwecks Gewinnung eines gerührten Gemisches zu behandelndes Wasser/PAK;
- einen Schritt der Filterung des gerührten Gemisches zu behandelndes Wasser/PAK in einer Membranfiltereinheit zwecks Erzeugung eines behandelten Wassers und eines an PAK reichen Konzentrats;
- einen Schritt der Rückführung des an PAK reichen Konzentrats stromaufwärts und/oder innerhalb des gerührten Bereichs;
wobei die Konzentration von PAK in dem Gemisch zwischen 1 und 10 g/l liegt;
wobei das Gemisch zu behandelndes Wasser/PAK während einer Kontaktzeit zwischen 2 und 20 Minuten in dem gerührten Bereich gehalten wird;
wobei das Verfahren außerdem einen Schritt der Ozonisierung des zu behandelnden Wassers umfasst, der die Injektion von Ozon in das zu behandelnde Wasser vor der Injektion von PAK beinhaltet, um ein Gemisch zu behandelndes Wasser/Ozon zu erhalten, dessen Konzentration an Ozon zwischen 0,5 und 3 mg/l liegt.

2. Verfahren zur Behandlung von Wasser nach Anspruch 1, **dadurch gekennzeichnet, dass** dem Schritt der Rückführung ein Schritt der Extraktion von verbrauchter PAK aus dem Konzentrat vorangeht.

3. Verfahren zur Behandlung von Wasser nach einem der Ansprüche 1 oder 2, **dadurch gekennzeichnet, dass** die PAK eine Korngröße aufweist, deren Wert zwischen 5 und 50 µm liegt.

4. Verfahren zur Behandlung von Wasser nach einem der Ansprüche 1 bis 3, **dadurch gekennzeichnet, dass** in die Filtereinheit Ultrafiltrationsmembranen integriert sind.

5. Verfahren zur Behandlung von Wasser nach einem der Ansprüche 1 bis 4, **dadurch gekennzeichnet, dass** in die Filtereinheit Mikrofiltrationsmembranen integriert sind.

## Claims

1. Method for treating water in order to purify it or make it drinkable, **characterised in that** it comprises the following steps:
- a step for injecting powdered activated carbon (PAC) into said water so as to obtain a mixture of water to be treated and PAC;
- a step for conveying said mixture of water to be treated and PAC into a stirred contacting area in order to obtain a stirred mixture of water to be treated and PAC;
- a step for filtering said stirred mixture of water to be treated and PAC within a membrane filtration unit in order to produce treated water and a PAC-rich concentrate;
- a step for recirculating said PAC-rich concentrate upstream and/or within said stirred area.
the concentration in PAC of said mixture ranging from 1 to 10g/l;
said mixture of water to be treated and PAC being kept in said stirred area for a contact time ranging from 2 to 20 minutes;
said method additionally comprising a step of ozonation of said water to be treated, the step including the injection of ozone into said water to be treated prior to the injection of PAC so as to obtain a mixture of water to be treated and ozone, the ozone concentration of which ranges from 0.5 to 3 mg/l.

2. Water treatment method according to claim 1, **characterised in that** said recirculation step is preceded by a step for extracting used PAC from said concentrate.

3. Water treatment method according to any one of claims 1 or 2, **characterised in that** said PAC has a grain size, the value of which ranges from 5 to 50 µm.

4. Water treatment method according to any one of claims 1 to 3, **characterised in that** said filtration unit incorporates ultra-filtration membranes.

5. Water treatment method according to any one of claims 1 to 4, **characterised in that** said filtration unit incorporates micro-filtration membranes.
